# EUROPEAN PATENT APPLICATION

(11) **EP 4 388 928 A1**
(43) Date of publication of application: **26.06.2024**
(21) Application number: 23020554.4
(22) Date of filing: 15.12.2023
(51) Int. Cl.: A45D 20/12, H01C 3/16, H01C 3/14, A45D 20/10

(54) **HAIR TREATMENT DEVICE PROVIDED WITH A MOTOR POWER RESISTOR HAVING A FLAT SECTION WIRE**

(30) Priority: 21.12.2022 IT 202200026181
(71) Applicant: Tenacta Group S.p.A., 24052 Azzano S. Paolo (BG) (IT)
(72) Inventor: Morgandi, Arturo, I-24052 Azzano San Paolo (BG) (IT)
(74) Representative: Contessini, Pier Carlo

(57) **Abstract**

The present invention refers to a hair treatment suitable for being powered by voltages of at least 200 Volts, wherein said device comprises: a) a motor suitable for being powered with direct voltage from 10 Volts dc to 90 Volts dc, b) a resistor R1 consisting of a first metal wire bent in a wave shape and wound on at least one mica sheet, wherein said resistor R1 is placed in series with the motor and is suitable for powering the motor itself, c) at least one heating resistor R2 consisting of a second metal wire bent into a wave shape, arranged adjacent to the first metal wire which constitutes the resistor R1 and wound on the at least one mica sheet, and d) a fan suitable to be driven by said motor, characterized in that the resistor R1 is consisting of a wire having a flat section of lower than 0.050 mm².

In this way, despite having a device powered by at least 200 Volts available, the power dissipation determined by the resistor R1 activating the low voltage motor up to a maximum of 90 Volts when the "cold air blow" is applied will be for example of only about 150 Watts, therefore much lower than the dissipation of about 300-500 Watts recorded in prior art devices wherein there are small motors and resistors powering the motor made up of round section wires.

Furthermore, thanks to the fact that the resistor R1 powering the motor is made up of a wire with a flat section lower than or equal to 0.050 mm², it is possible to obtain a hair treatment device respecting the construction constraints.

## Description

### Field of invention

The present invention refers to a hair treatment device provided with a resistor consisting of supports of mica sheets on which wave-folded alloy wires are wound. In particular, the present invention refers to a hairdryer with a power supply of at least 200 Volts, equipped with a motor operating with a voltage significantly lower than said supply voltage of at least 200 Volts of the hairdryer and a frequency of 50 or 60Hz, wherein the resistor powering said motor is constituted by a wire having a flat section lower than or equal to 0.050 mm².

### State of art.

Hair treatment devices are known nowadays, such as hair dryers or air stylers for brushes heating the air, equipped with a motor managing the fan for the hot air emission; there are devices equipped with a motor operating at a voltage significantly lower than the alternating supply voltage of the hairdryer and which is powered by a component which is typically a resistor wire wound in a wave shape on one or more mica sheets and connected in series to said motor and which, as a side effect, also heats the air depending on the power used by said resistor.

The motors operating at a voltage significantly lower than the alternating supply voltage of at least 200V of the hairdryer are small in size and consequently there are construction constraints as they can only accommodate windings with reduced dimensions and can accommodate windings operating only at low voltages, a maximum of up to 60-90 Volts, and the most common are set to operate at 15 - 40 Volts.

These motors work with direct current and therefore in the known in the art hair dryers using them there is typically a resistor placed in series with the circuit powering the motor and then, through a diode bridge, the direct voltage is generated.

Consequently, in a hairdryer powered for example at 230 Volts and a frequency of 50Hz, said motor can run at its design voltage, for example 24 Volts, which coupled with the air sucking fan absorbs a power of for example approximately 50 W with a current of approximately 2 A. A residual voltage of approximately 206 Volt (230 Volt - 24 Volt) falls on the resistor powering it, being placed in series with the motor in order to power the motor itself and therefore, having to supply the motor a current of 2 A, it dissipates a power equal to approximately 412 Watts (which can vary depending on the motor used), which represents a significant power dissipation rendering ineffective the cold air blow function (described below); hair dryers typically have maximum power in the 1200-2000 Watt range.

One of the problems encountered by the user who uses a hairdryer is that not all the known in the art hairdryers allow the user to perform the so-called "cold air blow" consisting in the fact that, after having styled the hair using the hot air emitted by the hairdryer, for example with the help of a brush, the user wants to fix the so styled hair using the cold air coming out of the same hairdryer in a subsequent phase.

In fact, the user often complains that the air used to create the cold air blow is not cold enough, although it is less hot than the hot air used in the previous hair styling phase.

This problem relating to the cold air blow does not occur with those types of hairdryers intended for use with supply voltages of only 100-125 Volts, as with these low voltages the power dissipation used by the resistor powering the motor is relatively low.

Conversely, the problem is very acute with hair dryers with a power supply of at least 200 Volts, such as 220-240 Volts, and equipped with a motor operating at low direct current voltage, typically ranging for example between 15 Volts and 40 Volts, as the power dissipation used by the resistor powering the motor is inversely proportional: example of approximately 600 Watts for a 15 Volt motor and of approximately 300 Watts for a 40 Volt motor. Practically, the lower the voltage used by the motor, the higher the current that must power it and therefore the higher the voltage falling on the resistor that powers it and which is placed in series with the motor itself. Due to the two effects related to the involved current and to the voltage that must fall on the resistor powering the motor, the power dissipated by the resistor itself will be higher. In particular, the Watts dissipated by the resistor powering the motor will be equal to the Volts that fall on the resistor itself x Amperes which is the current passing through both the resistor and the motor.

Typically, a cold air blow satisfies the user's needs if its power does not exceed values of 200 Watts, and it is preferable that said power does not exceed 150 Watts.

To obtain these cold air blow powers, with an engine respecting production constraints, it is preferable to use 60-90 Volt engines. This allows both to reduce the voltage at the ends of the resistor powering the motor itself, and the current that the motor requires to develop the same torque, but it implies having to increase the value of the resistor powering it and this implies having to use a rather thin wire diameter which is difficult to be safely used when it is waved bent and wound onto mica sheets.

Therefore, the arising technical problem is to create a resistor made up of mica sheets supports onto which wave-shaped metal wires are wound; however, for safety use, said wires must not have a too thin diameter as in this case they would be liable to come out of their seat in the event of impacts caused by the user during use of the device itself, with the risk of causing short circuits between the various wires wound on said mica sheets.

US Patent No. 6035097 A describes an electric heating unit, particularly for a hair dryer, comprising a first spirally wound wire heating element having a heat-conducting support comprising at least one support plate, and a heat-conducting winding is disposed thereon. This coiled wire heating element serves to heat the airflow flowing through the hair dryer. At least a second wire heating element is provided, fixed to the first heating element, which has the function of adapting the electrical voltage for a further electrical load, in particular as a series resistor, for a DC motor equipped with an impeller to produce the air flow.

International patent application no. WO20115677 A1 describes an electric heating element for hairdryers including a plurality of support plates made of electrical insulating material, fixed to each other angularly spaced around a main longitudinal axis and provided on respective external longitudinal edges with first slots suitable for receiving and supporting at least one first resistive wire wrapped around the support plates to form a first heating winding. A second resistive wire is wrapped around the support plates to form a second heating coil; the first resistive wire and the second resistive wire are capable of generating heat when powered by electric current.

Therefore, the Applicant of the present patent application has found the need to create a hairdryer equipped with a system of resistors allowing the user to be able to perform the cold air blow even with a hairdryer having a power supply of at least 200 Volts.

### Summary of the invention

In a first aspect, the present invention refers to a hair treating device such as that one indicated in claim 1.

The Applicant of the present application has in fact surprisingly found that the technical problem described above can be effectively and reliably solved by means of a hair treatment device capable of being powered with voltages of at least 200 Volts, wherein said device comprises: a) a motor capable of being powered with direct voltage from 10 Volts DC to 90 Volts DC, b) a resistor R1 consisting of a first metal wire bent in a wave shape and wound on at least one mica sheet, wherein said resistor R1 is placed in series to said motor and is suitable for powering the motor itself, c) at least one heating resistor R2 constituted by a second metal wire bent in a wave shape, arranged adjacent to said first metal wire constituting said resistor R1 and wound on said at least one mica sheet, and d) a fan suitable to be driven by said motor, characterized in that said resistor R1 is made up of a wire having a flat section lower than 0.050 mm².

In this way, thanks to the fact that the resistor R1 powering the motor is made up of a wire having a flat section lower than or equal to 0.050 mm², it is possible to obtain a hair treatment device respecting the construction constraints.

In fact, the reduced size of the flat section of the resistor wire R1 powering the motor allows the wire itself to be housed in the motor housing, while at the same time preventing short circuits from occurring between the turns of the resistor windings. In fact, once the flat section wire has been wound into the motor housing, the wire is stable and reduces the risk of its moving even in the event of an accidental fall of the device or following thermal stress.

Furthermore, while said at least one heating resistor R2 is suitable for providing the device of the present invention with a power of 1200-2000 Watts, the resistor R1, constituted by a wire having a flat section smaller than 0.050 mm², is suitable for powering the low voltage, i.e. up to a maximum of 90 Volts.

In this way, despite having a device powered by at least 200 Volts available, the power dissipation determined by the resistor R1 activating the motor when the "cold air blow" is applied will be lower than approximately 200 Watts, such as for example only approximately 100 Watts, therefore much lower than the dissipation of around 300-500 Watts recorded in prior art devices wherein there are small motors and resistors powering the motor made up of round section wires.

It will therefore be possible to have many more ohms available to put in series with the motor, combining this type of R1 resistor having flat section wire to a 50-90 Volt motor.

The device of the present invention is suitable for being powered with a high alternating voltage equal to at least 200 Volts, preferably powered with voltages of 220-240 Volts.

According to a preferred embodiment, the hair treatment device of the present invention is a hair dryer, an air brush shaper heating the air, or any hair care appliance emitting hot air. Preferably, said hair treatment device is a hairdryer.

According to an alternative preferred embodiment, said hair treatment device is a hairbrush.

According to another alternative preferred embodiment, said hair treatment device is a hairdryer equipped with a diffuser with reduced air flow speed.

According to a preferred embodiment, said resistor R1 is made up of a wire having a flat section lower than 0.0350 mm², preferably lower than 0.0250 mm².

According to a preferred embodiment, the flat section of said wire of said resistor R1 corresponds to an initial wire diameter (intended as the diameter of a round wire before making it flat section) lower than 0.20 mm, preferably lower than 0.15 mm.

According to a preferred embodiment, the hairdryer of the present invention further comprises a diode bridge connected to said resistor R1 and capable of generating said direct voltage suitable for powering said motor.

According to a preferred embodiment, said at least one heating resistor R2 is made up of at least one wire having a round section.

According to a preferred embodiment, said at least one wire having a round section of said at least one heating resistor R2 has a diameter lower than 0.40 mm, preferably lower than 0.35 mm, even more preferably lower than 0.30 mm.

In this way, said heating resistor has a round wire of such a diameter as to be able to deliver a desired power of 1200-2000 Watts.

According to an alternative embodiment, said at least one heating resistor R2 is made up of at least one wire having a flat section.

Further characteristics and advantages of the present invention will be better highlighted by examining the following detailed description of a preferred, but not exclusive, embodiment, illustrated for indicative and non-limiting purposes, with the support of the attached drawings, wherein:
- Figure 1 shows a schematic side view of a hair treating device treated with hot air of the present invention;
- Figure 2 shows a detail of Fig. 1 wherein the motor, fan and resistors are visible;
- Figure 3 shows a detail of Fig. 2 wherein the wave-bent flat wire resistor R1 powering the motor and the round wire electric heating resistor R2 are visible;
- Figure 4 shows in detail the wave-bent flat wire resistor R1 powering the motor;
- Figure 5 shows in detail the round wire electric heating resistor R2;
- Figure 6 shows an electrical diagram wherein the electrical resistors R1 and R2 and the electrical components necessary for their management are displayed.

### Detailed Description

The following detailed description refers to particular embodiments of the hair treatment device of the present invention, without limiting its content.

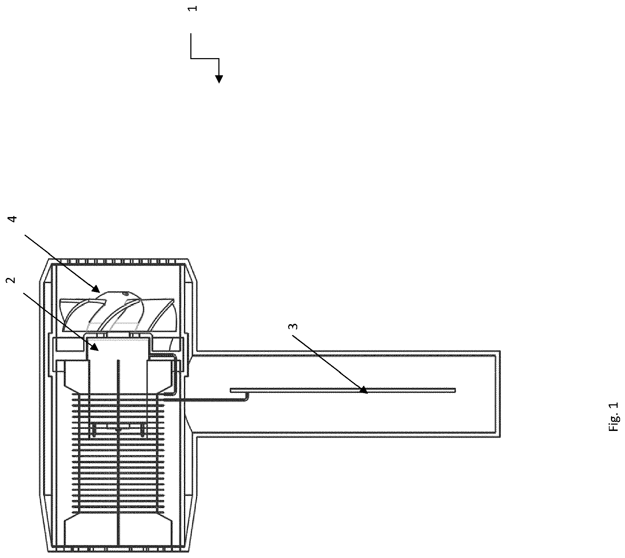

In particular, the embodiment herein described with reference to Figs. 1-6 refers to a hairdryer 1 of the present invention capable of blowing hot air on a user's hair.

The hairdryer 1 is equipped at its inside with a motor 2, a PCB-type plate 3 to manage the motor speed and the heating of the air, including the button managing the cold air blow, and a fan 4 driven from engine 2 to manage the air thus heated (Fig. 1).

The hairdryer 1 is suitable for being powered with voltages of approximately 220-240 Volts. The motor 2 present inside the hairdryer 1 is small in size and is suitable for being powered with direct voltage from 30 Volts DC to 90 Volts DC, for example 60-70 Volts DC.

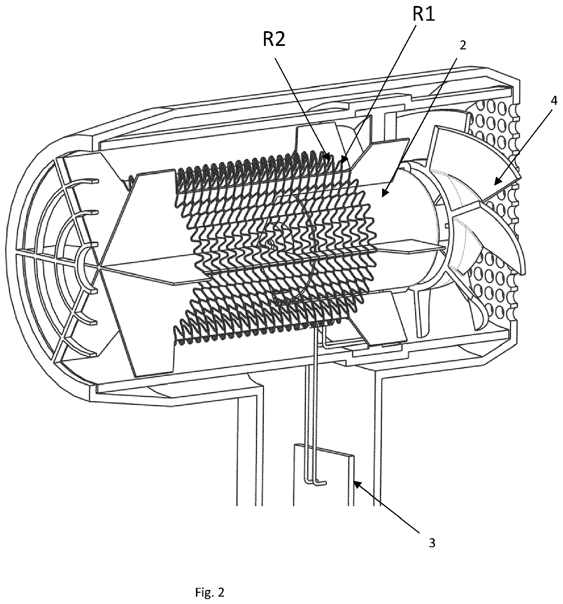

Fig. 2 shows a cross-section of the hairdryer 1 shown in Fig. 1 in order to make visible in more detail the motor 2, the plate 3 and the wave-bent metal wires making up the resistors R1 and R2, wrapped around the mica sheets (in other embodiments there may be more or fewer mica sheets intertwined with each other).

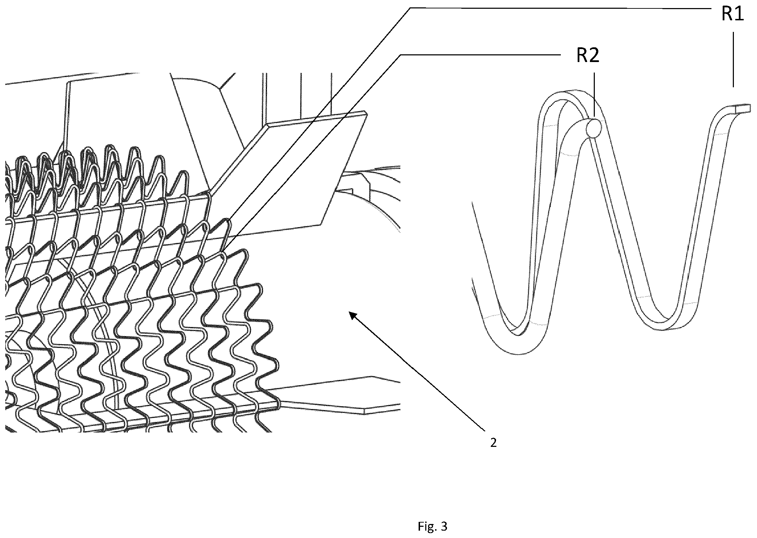

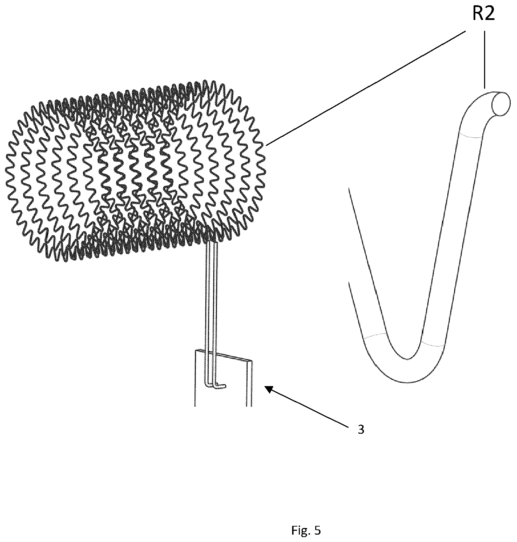

Fig. 3 shows in detail the resistor R1 and R2 arrangements and structures. In particular, it can be noted that the electric heating resistor R2 (shown in detail in Fig. 5), connected to the PCB-type plate 3, is made up of at least one support of mica sheets on which a wave-bent metal wire is wound. The wire of the electric heating resistor R2 has a round section of approximately 0.30-0.40 mm in diameter and is capable of feeding a power of approximately 1200-2000 Watts, variable proportionally based on the diameter of the round wire of the heating resistor. In this way, the electric heating resistor R2 generates most of the power required by the hairdryer 1 for its operation.

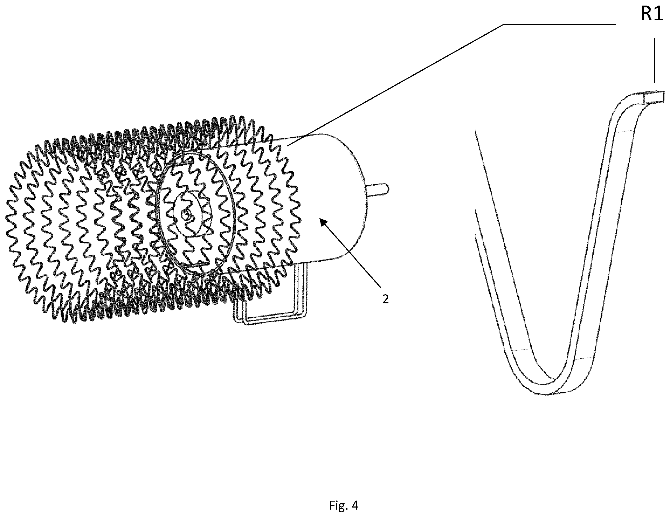

Conversely, resistor R1 is placed in series with motor 2 and is suitable for powering motor 2 itself. The resistor R1 (shown in detail in Fig. 4) is made up of a wire having a flat section smaller than 0.050 mm², for example with dimensions 0.080 mm x 0.50 mm, equal to approximately 0.040 mm², corresponding to an initial wire diameter (intended as the diameter of a round wire before making it flat) of approximately 0.225 mm. This reduced section of the resistor R1 which powers the motor 2, being made up of a flat wire, allows the wire itself to be bent into a wave shape and to be housed adjacent to the wire of the electric heating resistor R2, wrapped around the same mica sheet where the wire of the electric heating resistor R2 is also wrapped. Once the flat section wire of the resistor R1 has been wrapped in the housing of the mica sheet(s), the wire is stable and reduces the risk of its moving even in the event of an accidental fall of the hairdryer 1 or following stress thermals. This solves the problem relating to the mechanical stability of the reduced-section wire powering the low-voltage motor 2.

Furthermore, thanks to the fact that the resistor R1 is made up of a wire having a flat section smaller than 0.050 mm², the power dissipation determined by the resistor R1 activating the motor when the "cold air blow" is applied will be lower than approximately 200 Watts, such as only about 150 Watts.

In order to obtain an adequate value of the resistor R1, it is possible to select the most appropriate flat section lower than or equal to 0.050 mm², increasing or decreasing the length of the resistive wire; said length will depend on the geometry and length of the mica sheets on which the wires of the resistors R1 and R2 are wound.

The power dissipation is therefore much lower than the dissipation of around 300-500 Watts recorded in prior art devices wherein there are small motors and resistors powering the motor made up of round section wires bent into a wave shape and wound on one more mica sheets.

In this way, the "cold air blow", required by the user to fix the hair style previously created with hot air, will be performed with much colder air and therefore much more effective than known in the art devices.

It is therefore possible to have many more ohms available to put in series with the motor, combining this type of resistor R1 with flat section wire to a 60-90 volt motor, as shown only by way of example in the following table 1.

**TABLE 1**

| Hairdryer power supply voltage | Motor supply voltage | Resistor value of R1 | Voltage falling across R1 | Power dissipated by R1 | Power dissipated by motor | Total dissipated power |
|---|---|---|---|---|---|---|
| 230 Volt ac | 24 Volt dc | 115 ohm | 206 V | 370 Watt | 43 Watt | 413 Watt |
| 230 Volt ac | 70 Volt dc | 255 ohm | 160 V | 100 Watt | 43 Watt | 143 Watt |

In the example shown in the table, the resistor R1 having a flat section wire equal to approximately 0.040 mm² with its own length corresponding to an initial wire diameter (intended as the diameter of a round wire before making it flat section) of approximately 0.225 mm is 255 ohms for a motor powered at 70 Volts in direct current and the power dissipated by the resistor R1 added to the power dissipated by the motor (total dissipated power) when the "cold air blow" is applied is only about 143 Watt.

The power dissipation is therefore much lower than the dissipation of around 300-500 Watts recorded in prior art devices wherein small motors and resistors powering the motor are present.

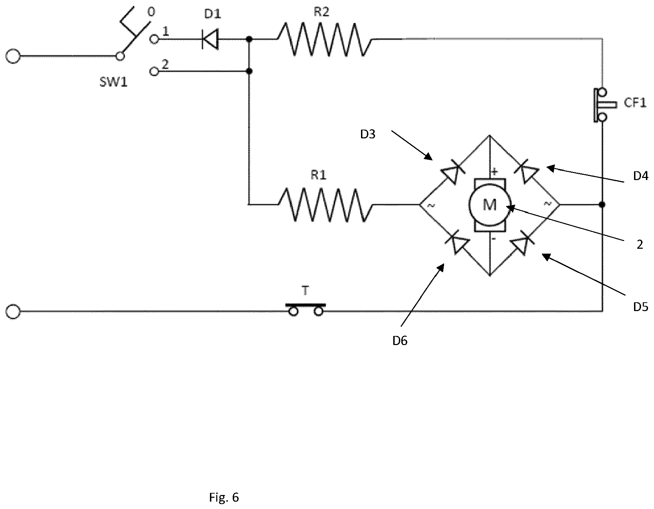

Fig. 6 shows the electrical diagram wherein an electrical resistor R2 suitable for heating the air is visible. In other embodiments of the present invention it is possible to have two electrical resistors R2 suitable for heating the air without modifying the scope of the present invention.

The diagram also shows a diode bridge indicated with D3, D4, D5, D6, connected to the resistor R1, generating the direct voltage for motor 2, and a button CF1 is shown, which when pressed, interrupts the power supply of R2 and generates the cold air blow.

The diagram also shows, as an example, a switch SW1 which is used to manage the device turning on (position 1 or 2) and turning off (position 0).

Position 1 of switch SW1 connects a diode D1 in series with R1 and R2 to halve the R2 power and to reduce the motor speed.

Position 2 of the SW2 switch allows to obtain the maximum R2 power and the maximum motor speed.

The thermal limiter T switches off the entire appliance in the event of a motor failure or in the event of an air flow significant reduction which can occur by, for example, obstructing the air intake filter.

In another example of the present invention, the resistor R1 is made up of a wire having a flat section of dimensions 0.080 mm x 0.40 mm, equal to approximately 0.032 mm² with its own length which corresponds to an initial wire diameter (intended as the diameter of a round wire before making it flat) of approximately 0.20 mm, keeping unchanged all the other characteristics of the above described hairdryer 1.

Also in this case, as shown in Table 2 below, the resistor R1 appears to have a high value in terms of ohms, 300, for a motor powered by 80 Volts in direct current and a reduced power dissipated by the resistor R1 of only 75 Watts. Consequently, the total power dissipated when the "cold air blow" is applied is only 115 Watts, considerably reduced when compared to the dissipation of around 300-500 Watts recorded in prior art devices having small-sized motors and resistors powering the motor.

**TABLE 2**

| Hairdryer power supply voltage | Motor supply voltage | Resistor value of R1 | Voltage falling across R1 | Power dissipated by R1 | Power dissipated by motor | Total dissipated power |
|---|---|---|---|---|---|---|
| 230 Volt ac | 24 Volt dc | 115 ohm | 206 V | 370 Watt | 43 Watt | 413 Watt |
| 230 Volt ac | 80 Volt dc | 300 ohm | 150 V | 75 Watt | 40 Watt | 115 Watt |

Of course, many modifications and variations of the preferred embodiments described will be apparent to those skilled in the art, while still remaining within the scope of the invention.

Therefore, the present invention is not limited to the preferred embodiments described, illustrated for illustrative and non-limiting purposes only, but is defined by the following claims.

## Claims

1. Hair treatment device (1) suitable for being supplied by voltages of at least 200 Volts comprising: a) a motor (2) suitable for being supplied with direct voltage from 10 Volts DC to 90 Volts DC, b) a resistor (R1) consisting of a first metal wire bent in a wave shape and wound on at least one mica sheet, wherein said resistor (R1) is placed in series with said motor (2) and is capable of powering the motor (2) itself, c) at least one heating resistor (R2) constituted by a second metal wire bent in a wave shape, arranged adjacent to said first metal wire which constitutes said resistor (R1) and wound on said at least one mica sheet, and d) a fan (4) suitable for be driven by said motor (2),
**characterized in that** said resistor (R1) consists of a wire having a flat section lower than 0,050 mm².

2. The hair treatment device (1) according to claim 1, wherein said device is a hair dryer.

3. Hair treatment device (1) according to claim 1, wherein said device is a hairbrush.

4. Hair treatment device (1) according to claim 1, wherein said device is a hair dryer equipped with a diffuser with reduced air flow speed.

5. Hair treatment device (1) according to any one of the preceding claims suitable for being supplied by voltages of 220-240 Volts.

6. Hair treatment device (1) according to any one of the preceding claims wherein said motor (2) is suitable for being supplied with direct voltage from 50 Volts DC to 90 Volts DC.

7. Hair treatment device (1) according to any one of the preceding claims, wherein said resistor (R1) consists of a wire having a flat section lower than 0,0350 mm², preferably lower than 0,0250 mm².

8. Hair treatment device (1) according to any one of the preceding claims, wherein the flat section of said wire of said resistor (R1) corresponds to an initial wire diameter smaller than 0,20 mm.

9. Hair treatment device (1) according to any one of the preceding claims, wherein said at least one heating resistor (R2) consists of at least one wire having a round section.

10. Hair treatment device (1) according to any one of the preceding claims further comprising a diode bridge connected to said resistor (R1) capable of generating said direct voltage capable of powering said motor.
